# EUROPEAN PATENT SPECIFICATION

(11) **EP 0 733 089 B1**
(45) Date of publication and mention of the grant of the patent: **06.05.1998**
(21) Application number: 95903683.1
(22) Date of filing: 06.12.1994
(51) Int. Cl.: C09J 123/08, C09J 143/04, C09J 151/06

(54) **IMPROVED MELT-PROCESSIBLE MOISTURE-CURABLE ETHYLENE COPOLYMER HOT-MELT ADHESIVES**
VERBESSERTER, SCHMELZVERARBEITBARER, DURCH FEUCHTIGKEIT VERNETZBARER, HEISSSCHMELZKLEBER AUS ETHYLEN-COPOLYMEREN
ADHESIFS THERMOFUSIBLES AMELIORES A BASE DE COPOLYMERE D'ETHYLENE POUVANT ETRE TRAITES EN FUSION ET DURCISSABLES A L'HUMIDITE

(30) Priority: 06.12.1993 US 163384
(43) Date of publication of application: 25.09.1996
(73) Proprietor: E.I. DU PONT DE NEMOURS AND COMPANY, Wilmington Delaware 19898 (US)
(72) Inventor: CASE, Ronald, Burton, Newark, DE 19711-3833 (US); STATZ, Robert, Joseph, Kennett Square, PA 19348-1624 (US)
(74) Representative: Abitz, Walter, Dr.-Ing.
(86) International application number: US9414001
(87) International publication number: WO9516005

(56) References cited:
- EP-A- 0 416 851
- WO-A-93/10200
- STN International, file CA, Chemical Abstracts, volume 120, no. 24, 13 June 1994, (Columbus Ohio, US), Toyoda, Toshihisa: "Silane-grafted copolymer compositions, especially for use as adhesives", abstract no. 300765, & JP 05320466 A2 931203, JP 92-136688 920528
- STN International, file CA, Chemical Abstracts, volume 108, no. 12, 21 Mars 1988 (Columbus, Ohio, US), Matsui, Etsuro et al: Crosslinkable resin compositions for weather-resistant coatings", abstract no. 96315, & JP 62187749 A2 970817, JP 86-27857 860213

## Description

### BACKGROUND OF THE INVENTION

### Field of the Invention

This invention relates to improved melt-processible, moisture-curable, ethylene copolymer based adhesive compositions which have both a specific and broad susbtrate adhesivity, and to a method of employing the compositions as adhesives to achieve elevated temperature adhesive utility. More particularly, it relates to grafted ethylene copolymers which contain both a carbonyl group in the main-chain, backbone polymer, and an alkoxysilane group in the graft, used in conjunction with a silyl group condensation catalyst.

### Description of Related Art

Melt-processible adhesives, while attractive compared with solvent based adhesives for environmental reasons, can lack utility at somewhat elevated temperatures. Such adhesives are inherently required to be fluid at higher elevated temperatures to be processible. Many adhesive polymers are largely amorphous. This is partly because significant crystallinity in a polymer can decrease adhesivity. This is unfortunate because crystallinity could provide strength and stiffness at use temperatures below the melting point. But in amorphous polymers, high fluidity at process temperatures may mean insufficient stiffness and strength for adhesive performance at lower (but still elevated) use temperatures.

A characteristic of all adhesives is that they are, to a greater or lesser extent, substrate specific. Some adhesives may be designed to provide a high level of adhesion to specific substrates, while others may be designed to be general-purpose adhesives, providing a moderate level of adhesion to as broad a range of substrates as possible. For a given chemical type of polymeric adhesive, the two functions may be difficult to achieve together.

Certain ethylene copolymers are known generally for use as inexpensive, melt-processible, hot-melt adhesives. Ethylene/vinyl acetate polymers in particular are used extensively as such. Such simple unmodified ethylene copolymers however may be both lacking in utility for certain substrates, and be lacking in utility at somewhat elevated temperatures.

To extend the range of utility of melt-processible ethylene copolymer adhesives, approaches which have been used include those which address the above problems. That is to say, adhesive have been sought which have adhesivity either to a broader or to a specific range of substrates, (or both), and also which have improved adhesivity at somewhat elevated temperatures.

PCT Patent Application No. WO91/18043 describes use of ethylene/acrylate/carbon monoxide copolymers in combination with a tackifier, as adhesives useful for a wide variety of substrates, as well as being specifically useful for PVC. The carbonyl group appears to provide adhesion to a broad spectrum of substrates. These copolymer compositions, however, have limited utility as adhesives at higher temperatures.

Blending ethylene copolymers with a small to moderate amount of certain block copolyesters which have stiff crystalline segments has been disclosed as a means of providing ethylene copolymer based adhesives with higher temperature utility, especially for PVC, in U.S. Patent No. 5,234,986 (McBride). The ethylene copolymers employed included ethylene/alkyl (meth)acrylate/carbon monoxide copolymers.

Use of silane groups to provide moisture crosslinkability (curabability) is well known. Methods of introducing such groups into ethylene copolymers either by condensation reactions, or by free-radical addition reactions using vinyl silanes, is well known. Silane groups are known to be useful in providing adhesion to glass.

U.S. Patent No. 5,210,150 (Prejean) discloses melt-processible, moisture-curable, ethylene copolymer based adhesives which have elevated temperature adhesive utility. This is provided by crosslinking of silane groups in a graft-copolymer, via moisture cure, after melt application. The ethylene copolymer base used is a graft copolymer of a direct ethylene copolymer containing an acid carboxylic group, grafted by condensation, with controlled amounts of epoxysilanes. There is no disclosure of utility for any specific substrates. No requirement for silyl group condensation catalysts when using the composition is disclosed.

U.S. Patent No. 5,209,983 (Case et al.) discloses an ethylene copolymer based adhesive composition suitable for specific substrates. The composition is useful for laminating wood or metal and PVC, particularly when the laminate is subject to moist environments. It comprises a three-component mixture of PVC itself, and two different ethylene copolymers. One of the ethylene copolymers contains a carbonyl group and can be an ethylene/alkyl acrylate/carbon monoxide copolymer, and the other contains an epoxy-group-containing comonomer, such as glycidyl methacrylate, and can be ethylene/alkyl acrylate/glycidyl methacrylate. There is no suggestion that such an adhesive would have improved elevated temperature adhesivity. Experiments conducted in conjunction with the investigation of the present invention, and described below, showed no better adhesion between PVC and glass at elevated temperatures than that for an ethylene/alkyl acrylate/carbon monoxide polymer alone, despite the presence of an epoxy group.

U.S. Patent No. 5,112,918 (Boocock et al.) discloses concentrates of vinyl alkoxysilanes in an ethylene copolymer which acts as a carrier polymer, as being useful as a means of providing quantitative control and versatility for the addition of such vinyl alkoxysilanes to an alpha-olefin polymer to which the vinyl alkoxysilane is to be grafted. The grafted alpha-olefin can be moisture cured via the silane groups. The ethylene copolymers which can be used as carrier polymer in the concentrate include ethylene/alkyl acrylate/carbon monoxide copolymers. It is the alpha-olefin polymer however, not the ethylene copolymer used in the concentrate, which is the polymer to be the subject of grafting with the vinyl alkoxysilane. The patent also discloses that silyl condensation catalysts including zinc, iron and tin salts, and titanates can be present in the concentrate composition as a means of introducing the same into the resulting alpha-olefin graft polymer.

Japanese patent application No. J62,187,749A discloses a crosslinkable composition useful as coating or adhesive, which comprises a vinyl-type polymer having an acidic carboxyl group, a vinyl-type polymer having epoxy and silyl groups and a silyl condensation catalyst.

While the above described art includes adhesives which provide one or another desirable characteristic, including substrate specificity or broad substrate utility or utility at elevated temperatures, no one composition provides all these characteristics at the same time. There is a need for an adhesive which can be used to provide the combined utility of (1) specific adhesivity between PVC and other substrates, particularly glass, polyester, wood and metal, (2) general adhesivity to a range of polymeric substrates, and (3) maintenance of that adhesivity at elevated temperatures.

### SUMMARY OF THE INVENTION

The present invention provides a melt-processible, ethylene copolymer based adhesive composition which contains a grafted unit having silyl groups which allow it to be moisture-curable, i.e. crosslinkable, resulting in adhesivity at elevated temperatures. The main-chain backbone polymer is a direct ethylene copolymer containing a carbonyl group. The grafted unit derives from vinyl alkoxysilanes. The resulting chemical nature of the composition also provides adhesivity to both specific substrates and a broad range of substrates. A key requirement is that a silyl condensation catalyst be present, either in the adhesive, in the substrate or substrates, or that the substrate or substrates be treated to have a coating of such a catalyst.

According to the present invention there is provided an adhesive composition, comprising:
(A) a graft copolymer which is the reaction product of
   (a) a direct copolymer of (i) ethylene, (ii) 5-50 weight percent, based on the weight of the direct copolymer, of an alkyl acrylate, alkyl methacrylate, or alkyl vinyl ether having an alkyl group with 1-8 carbon atoms, and (iii) 1-20 weight percent, based on the weight of the direct copolymer, of carbon monoxide, and
   (b) 0.1-3.5 weight percent, based on the weight of the graft copolymer, of a vinyl alkoxysilane, and
(B) from 0 to 0.5 weight percent based on the graft copolymer, of a silyl group condensation catalyst, provided that if no potential adherend contains a silyl group condensation catalyst, or if no potential adherend has been surface treated to provide a coating of such a catalyst, the silyl group condensation catalyst is present at a level of above 0.01 weight percent.

Further, according to the invention, is a method of using the above composition as an adhesive to make a laminate, by using it as an adhesive layer in conjunction with one adherend which is PVC or a thermoplastic polyester, and the other adherend which is wood, glass or metal, or with two adherends which are thermoplastics, the adhesive composition, or one or both adherends containing a silyl condensation catalyst, or one or both adherends having been surface treated with such a catalyst, the laminate being allowed to stand several hours at ambient temperatures or above to cure the adhesive.

### DETAILED DESCRIPTION OF THE INVENTION

In this disclosure the phrase 'direct copolymer' means a copolymer made by copolymerization of monomers together, as distinct from grafting a comonomer or prepolymerized unit onto a backbone polymer (which may be a direct copolymer). The latter is a 'graft copolymer', and this is the type of copolymer of the present invention, vinyl alkoxysilane monomer having been grafted onto a direct ethylene copolymer backbone. When a monomer is grafted on a direct copolymer, the monomer, if randomly grafted, will be grafted on polymer molecules in proportion to the size of the molecule in the polymer, so large molecules will have more grafts and very small ones may have none. In using the term graft copolymer, it is understood that some smaller molecules within the size distribution may have no grafted monomer.

The unqualified term 'copolymer' is used as a general term for direct or graft copolymers containing any number of comonomers. Specific terms like 'terpolymer' are self-explanatory. When a copolymer is said to 'contain' a given monomer, or to be a copolymer 'of' a given monomer, or copolymer 'having' a certain comonomer and the like, it is to be understood that this means the polymer contains polymerized units derived from the given monomer.

The term 'adherend' is any substrate to which the adhesive is applied. The term 'substrate' is used in the more general sense of any material which is a potential adherend.

The terms 'cure' and 'curable' are used generally to mean that condensation reactions can take place that potentially lead to crosslinks. The term 'crosslinkable' means essentially the same. The graft units which are curable in the present invention derive from vinyl alkoxysilanes. In this disclosure, the term silane unit or group refers to the -Si(OR)3 group, while a silyl unit or group is the individual -Si-O-R group, R being H or alkyl. Thus either the silane group or the silyl groups are said to be cured. Cure catalysts are generally referred to as silyl group condensation catalysts or just silyl condensation catalysts.

The abbreviation PVC is used as a general means of referring to all poly(vinyl chloride) compositions, including the many copolymers available. Such compositions are often referred to as 'Vinyls' in commerce.

The direct ethylene copolymer which forms the backbone of the graft copolymer of the adhesive composition is a terpolymer containing units derived from ethylene, from 5 to 50 weight percent of a second monomer which is an alkyl acrylate, alkyl methacrylate or alkyl vinyl ether, and whose alkyl group contains from 1 to 8 carbon atoms, and from 1 to 20 weight percent of carbon monoxide.

The function of the second monomer is to 'soften' the backbone polymer increasing its adhesivity, and to reduce the level of crystallinity, since crystallinity can detract from adhesivity. Below 5 percent, insufficient softening and reduction in crystallinity occurs, while above 50 percent, the comonomer is difficult to incorporate, as well as producing a polymer which is difficult to handle. The third monomer is carbon monoxide, which can provide ethylene copolymers with broad substrate adhesivity, as noted above. Preferably, the polymer contains 10 to 40 weight percent alkyl acrylate, and 3-15 weight percent carbon monoxide. The alkyl acrylate is preferably n-butyl acrylate.
Terpolymers of this nature can be miscible with PVC, as disclosed in U.S. 3,780,140, and hence provide specific adhesivity to that substrate.

Preparation of these direct copolymers is achieved using well-known methods, using a continuous, stirred reactor, at high temperatures and pressures, such as described in U.S. 3,780,140, which is hereby incorporated by reference. In this process, feed rates of monomers are adjusted in accordance with their various reactivities. Melt index of suitable direct copolymers can be anywhere between 3 and 2500. However, 5 to 1000 is preferred and 5 to 200 most preferred.

Ethylene copolymers may be grafted with vinyl alkoxysilanes by well known methods, such as by melt reaction in a melt extruder. This is achieved by using an extruder with a screw design which can provide good mixing of molten polymer with the graft monomer, such as a twin-screw extruder. The direct copolymer may be fed into the throat of the extruder and the vinyl alkoxysilane and radical polymerization catalyst fed into the extruder through an extruder-barrel port. Graft copolymers of the specific direct ethylene copolymer of the present invention with vinyl alkoxysilanes do not appear to be known. While not limiting ourselves, it is believed however, that the grafting reaction is similar to that for other ethylene copolymers, and that the particular comonomers do not have a major effect on the grafting reaction.

The amount of alkoxysilane required is an amount sufficient to result in from 0.1 to 3.5 weight percent alkoxysilane being grafted to the direct copolymer. The efficiency of grafting may be quite low. For instance, under the experimental conditions used in the present investigation to graft the alkoxysilane, typically only about one third of the alkoxysilane fed into the melt mixture remained in the resulting graft copolymer, as determined by neutron activation analysis for silicon. A considerable amount volatalized under the reaction conditions. Thus, to obtain 0.5 weight percent alkoxylsilane in the graft copolymer it might be necessary to feed at a rate of, say, 1.5 weight percent of alkoxysilane, based on the amount of polymer being fed into the extruder. Of the amount of vinyl alkoxysilane remaining in the graft copolymer, most is believed to be grafted on. That is to say, little remains as free vinyl alkoxysilane, since such materials are fairly volatile. The amount grafted on may be assumed to be essentially the amount calculated, based on the amount of silicon in the graft copolymer. The phrase 'reaction product of', [a direct copolymer and a (specified) weight percent of vinyl alkoxysilane] means that the specified percent remains, essentially reacted, in the graft copolymer; and not that the specified percent was fed into the extruder. If the percent alkoxysilane in the graft copolymer is less than 0.1 weight percent, the rate of crosslinking during moisture cure is too slow, and/or the amount of crosslinking after cure is insufficient to improve adhesion at high temperatures adequately.

While the amount of grafted alkoxysilane which is effective in producing crosslinked polymer on cure can be as low as 0.1 weight percent, when lower molecular weight (higher melt index) direct copolymers are to be grafted, higher levels of grafting will be required for effective crosslinking of the resulting graft copolymer. As much as 3.5 weight percent can be used. Cost considerations will keep the level as low as is effective. Preferably the amount of vinyl alkoxysilane in the polymer is 0.3 to 1.0 weight percent. This level is quite effective for direct copolymers having the preferred melt index for the direct copolymer of from 5 to 200.

Any vinyl alkoxysilane is suitable. However, only a limited number are available commercially. The preferred vinyl alkoxysilanes are vinyl trimethoxysilane and vinyl triethoxysilane. Vinyl trimethoxysilane is most preferred.

An assessment of the effectiveness of the grafted alkoxysilane in producing crosslinked polymer, after cure, can be made by curing the graft copolymer with a silyl condensation catalyst in the presence of water, then attempting to dissolve the cured polymer in boiling xylene, measuring the amount which dissolves and the amount which remains insoluble. Typically, from 30 to 55 percent of the cured graft copolymer remained insoluble. Since random grafting of a polymer will lead to molecules becoming grafted in proportion to their size, as noted above some small molecules will remain ungrafted and larger ones have several grafts. As a result, on curing there will be a 'sol' and a 'gel' fraction. Higher molecular weight, (i.e. lower melt index) polymers will produce more gel (insoluble polymer) for a given weight percent crosslinks. Based on experience with crosslinked polyethylene polymers used in wire and cable, in the range of melt index of the direct copolymers used in the present invention, 30 weight percent gel represents a high level of crosslinking while 70 weight percent is regarded as extremely high. On this basis, the graft copolymers were found to be highly crosslinkable.

While antioxidants are not absolutely essential in the composition of this invention, their presence is highly desirable. This provides melt stability to the adhesive composition. A high level of melt stability is highly desirable in melt-processible adhesives, and particularly those which are sufficiently fluid to be applied using well-known hot-melt techniques, since long hold up times in the melt are common. A large range of antioxidants is known, and many may be suitable in the present composition. Tests with several antioxidants showed some antioxidants were significantly better than others. Among those found suitable were hindered phenol antioxidants such as IRGANOX 1035, which was better than IRGANOX 1010, which was better again than IRGANOX 1098. These antioxidants are available from Ciba Geigy Corp. Another antioxidant found highly suitable was BHT (butylated hydroxy toluene, available from Uniroyal Corp.). Without antioxidants, the direct copolymer is capable of undergoing side reactions which lead to melt instability in the graft copolymer, making melt application extremely difficult to control.

The adhesive composition of this invention may contain a silyl group condensation catalyst to enhance the rate of silyl curing in the presence of moisture. However, this may be a disadvantage in some circumstances. Curing is required after the adhesive has been applied, not before. Thus the presence of a silyl condensation catalyst will make the adhesive composition more moisture sensitive before application as an adhesive, requiring stricter measures to keep the composition free of moisture. It is far preferable to provide the silyl condensation catalyst as a surface coating on one or both of the adherends. Many materials act as silyl condensation catalysts. Such materials include zinc iron and tin compounds including salts of those metals, strong acids such as toluenesulphonic acid and bases such as sodium hydroxide. Of these, tin compounds are particularly effective. Such compounds include dialkyl tin mercaptides, dibutyl tin dilaurate, dibutyl tin dicarboxylate and stannous octoate. The mercaptides, the dilaurate and dicarboxylate are particularly effective, while stannous octoate has been reported in the literature to be somewhat less effective.

PVC requires stabilizers to process, to prevent degradation reactions which include dehydrochlorination, oxidation, chain scission and crosslinking. The primary stabilizers may be inorganic, metal organic or organo-metallic compounds, while secondary stabilizers include a range of organic compounds. The metals involved include tin, lead, barium, cadmium, calcium, zinc and others. Stabilizers for PVC are often customized for a given grade. Surprisingly, it was discovered that some materials which are used to stabilize PVC act, coincidentally, as silyl condensation catalysts, particularly the tin stabilizers. The result is that certain grades of PVC contain the right type of stabilizer, in sufficient amounts to act as a silyl condensation catalyst when the adhesive of the present invention is used with PVC as a substrate. The range of stabilizers for PVC is so large, and compounds capable of catalyzing silyl crosslinking so varied, that it is manifestly impossible to be sure whether any grade of PVC will contain a stabilizer in sufficient quantity to act as a silyl condensation catalyst. In several PVC grades tried, the PVC used as a substrate caused adequate crosslinking of the adhesive in acceptable times.

If a PVC adherend contains insufficient quantities of, or no silyl condensation catalyst, or if other adherends are being used, it is possible to coat the adherend or adherends with such a catalyst. While many catalysts will be effective, as noted above, coating with IRGASTAB T634, using a 0.5 weight % solution in toluene was found particularly effective. IRGASTAB T634 is a mixture of dibutyl tin dicarboxylate and dibutyl tin dimercaptide, manufactured by Ciba-Geigy Corp. Another effective way of providing a controlled amount of catalyst coating is to layer a gauze soaked with the catalyst between the adherend and the adhesive. The gauze becomes part of the laminate.

The melt-processible graft copolymer adhesive compositions of the present invention can be used as a film adhesive, an extrusion coating adhesive, or may be applied using hot-melt equipment. Generally, a higher melt-index more fluid resin is required for the latter. Melt index of the graft copolymer can range from 1 to 1000. For hot-melt application, melt-indices above 30, preferably above 60 are needed.

The graft copolymer adhesive composition of the present invention has adhesive strength before moisture cure, but cure is required to provides an adhesive bond useful at elevated temperatures. Generally, sufficient moisture is present in, or permeates into laminates employing the adhesive to effect a significant level of cure, at ambient temperatures (20 -30 deg. C.) in a few hours. Longer times, in very moist conditions, at somewhat higher temperatures, may produce more cure and allow adhesion at even higher temperatures. Where the polymer itself was to be tested to determine maximum cure possible (by determining 'gel' and 'sol' fractions), the graft copolymer itself was actually heated in hot water for several hours.

The composition is suitable alone as an adhesive, but may also be formulated using art-recognized modifiers such as plasticizers and tackifiers. Plasticizers can increase melt index, i.e. reduce viscosity, to provide more ready hot-melt utility. Plasticizers however will generally detract from the ability to maintain adhesivity at elevated temperatures. The use of plasticizers and tackifiers is well known in the adhesives industry, and extensive listings of such materials are given for instance in U.S. Patent No. 4, 338, 227, which is hereby incorporated by reference.

### EXAMPLES

In Examples P1 and P2 the preparation of vinyl alkoxysilane grafted ethylene copolymer is illustrated. Examples 1-6 and comparative Examples C1-C10 relate to compositions and lap shear tests on those compositions, to determine high temperature adhesive utility. Details are given in Tables I and II.

Melt Index is measured using ASTM D-1238 (2160g./190 deg. C.)

Laminates for testing were prepared in a laboratory hydraulic press at a temperature of 130 deg. C. for about 2 minutes, at almost no pressure, up to about 14 psi, using sufficient copolymer to provide an adhesive layer having a thickness of from 1 to 5 mil.

A Shear Adhesion Failure Temperature (SAFT), was measured using Lap Shear testing, well known in the adhesives field, as follows. Laminated samples were allowed to stand overnight at room temperature (23-26 deg. C), which allows the adhesive to cure when silyl groups and catalyst are present. Various procedures are commonly used to measure a SAFT value. In the present case, the fail temperature of the bond was determined by loading the 1 square inch lap shear bond sample, held vertically, with a 240 gram weight and subjecting the samples to elevated temperatures starting at 70 deg. C, and increasing the temperature in 10 deg C. increments until failure occurred. The samples were held at each temperature level for 20 minutes. A 70 deg. C. fail temperature means the adhesive bond would fail at or below 70 deg. C. An 80 deg. C. fail temperature means the bond held at 70 deg. but failed at 80 deg. C. The criterion for judging that an adhesive bond provides adhesion at elevated temperatures was that its SAFT should be 100 deg. C. or above.

### Examples P1

A direct ethylene copolymer, ethylene/n-butyl acrylate/carbon monoxide containing 60 weight percent ethylene, 30 weight percent n-butyl acrylate and 10 weight percent carbon monoxide and having a melt index of 12, was fed to the throat of a Berstorff, 25mm., co-rotating, intermeshing, seven-barrel, twin-screw extruder having a length to diameter ratio of 38/1. Through an injection port in barrel 1, a mixture of 96 weight percent vinyl trimethoxysilane and 4 weight percent 2,5-dimethyl-2,5-di-(t-butylperoxy)hexane, (available as LUPERSOL 101, manufactured by Atochem Corp.), was fed at a rate of 1.49 grams per minute. The screw speed was 300 rpm, and the barrel temperatures (deg. C) were about 125, 160, 210, 210, 210, 210, and 209 for barrels 1 through 7 respectively. A vacuum was applied at barrel 6 to help remove unreacted vinyl trimethoxysilane. Product was collected at a rate of 76 grams per minute. Melt Index of the product was 14.2 g/10 minute, and the silicon content, determined using neutron activation analysis, corresponded to a vinyl trimethoxysilane level of 0.47 +/- 0.1 weight percent. This indicates that a little less than one third of the vinyl trimethoxysilane fed into the extruder remains in the graft copolymer.

To demonstrate that a significant amount of grafting had actually taken place, and that the graft copolymer was capable of being cured to produce highly crosslinked polymer, the polymer was moisture crosslinked in the presence of a silyl condensation catalyst and the amount of polymer insoluble in boiling xylene determined. The silyl condensation catalyst was made into a concentrate for ready control of mixing and concentration when feeding into the graft copolymer. A 1 weight percent catalyst concentrate was made by mixing 10 grams of dibutyl tin dilaurate (FASCAT 4202 manufactured by Atochem), with 990 grams of the same direct ethylene copolymer used to make the graft copolymer, in a HENSCHEL mixer for about 5 minutes. The same polymer was used largely for convenience. Other ethylene copolymers could have been used to make the catalyst concentrate. 2 grams of this concentrate was mixed with 38 grams of the graft copolymer in a BRABENDER Plasticorder under nitrogen, mixing for about 5 minutes. A portion of the cooled solidified polymer was heated in water at 65 deg.C. for 8 hours to effect crosslinking. It was found that 31 weight percent of the polymer was insoluble in boiling xylene, indicating a significant level of vinyl trimethoxysilane had been grafted onto the direct copolymer, and could be effectively cured to produce crosslinked polymer.

### Example P2.

Exactly the same preparative procedure was carried out, except that the direct copolymer was an ethylene/n-butyl acrylate/carbon monoxide terpolymer having a 63/27/10 weight ratio of monomer derived units, and a melt index of 100. The same vinyl trimethoxysilane/LUPERSOL 101 mixture was fed into the same extruder at a rate of 1.45 grams per minute. The production rate was 77 grams per minute. The product had a melt index of 55, or about half that of the direct copolymer. Vinyl trimethoxysilane content was about 0.52 weight percent. After moisture crosslinking in the same way as in Example P1, 54 weight percent of the polymer was found to be insoluble. This is regarded as a very high level of effective crosslinking.

### Examples 1-6 and Comparative Examples C1-C10.

In Examples 1 and 2, the adhesive compositions, shown in Table I, were each tested in a laminate between polyester (MYLAR) and glass, the MYLAR having been treated with a tin, silyl condensation catalyst. In Examples 3 to 6, the adhesive compositions shown in the Table were tested in a laminate between PVC and glass. The PVC samples were believed to be stabilized with a tin stabilizer, which also acts as a silyl condensation catalyst, and the PVC was not surface treated with catalyst. In all cases, after the laminate had been allowed to cure overnight, the SAFT was 130 deg. C. or above, indicating the utility of the composition in providing adhesion at high temperatures.

Comparative Example C1 shows that the (ungrafted) direct carbon monoxide containing copolymer used to make the graft copolymer in Example P1, when used alone between MYLAR and glass, gives no adhesion to glass at all. This is so, despite the fact that such carbon monoxide containing direct copolymers have been disclosed, as discussed above, as being good adhesives for a variety of polymeric and metal substrates. In Example C2, the presence of a silyl condensation catalyst in the same composition and type of laminate, did show some initial adhesion, but failure occured at or below 70 deg.C. It is not understood why catalyst should provide some initial adhesion, since the composition has no silyl groups, while in Example C1 no adhesion to glass was obtained. However, adhesion at elevated temperatures is minimal, since failure is at or below 70 deg. C.

In Comparative Examples C3 and C4, the same ungrafted direct carbon monoxide containing direct copolymer was used in a PVC/glass laminate. Adhesion is maintained only above 70 deg.C, failing at 80 deg. C. The modest adhesion between PVC and glass observed, in the absence of silyl groups in the polymer, just as for Example C2, is not understood.

Comparative Examples C5 to C8 are for PVC/glass laminates. The adhesive used is a composition falling within the claims of U.S. 5,209,983. This patent indicated the compositions claimed provide particularly good adhesion, particularly under moist conditions, when used in laminates, between PVC and wood or metal. The composition tested consisted of a three-component mixture of PVC, the direct carbon monoxide containing ethylene copolymers used to make graft copolymers in Examples P1 and P2 (ethylene/n-butyl acrylate/carbon monoxide), and an ethylene copolymer containing units derived from an epoxy-group-containing comonomer (ethylene/n-butyl acrylate/glycidyl methacrylate). The SAFT determined was no better than in Examples C3 and C4. The presence of PVC, and even the epoxy group containing ethylene copolymer, provides no improvement in elevated temperature adhesion in the composition tested.

Comparative Examples C9 and C10 use the adhesive of the present invention, in a MYLAR/ glass laminate. However, no silyl group condensation catalyst was present, either in the adhesive composition, in the susbtrate, or coated on the substrate. One composition contained no antioxidant. While, as noted, antioxidant is preferred for melt processing, its absense appeared to have only minimal effect on SAFT. However, in these examples, the SAFTs observed were only 80 and 90 deg.C. Without any silyl condensation catalyst, no adhesion at significantly elevated temperatures was achieved.

**TABLE 1**

| COMPOSITIONS TESTED AS ADHESIVES | |
|---|---|
| Used in Example No. | Composition |
| 1 | E/nBA/CO (60/30/10)-graft-vinyl trimethoxysilane (0.47 wt.% in grafted polymer) + 10,000 ppm. IRGANOX 1035 |
| 2 | As Example 1 with no antioxidant |
| 3 | As Example 1 |
| 4 | As Example 1 |
| 5 | As Example 2 |
| 6 | As Example 2 |
| | |
| C1 | E/nBA/CO(60/30/10), MI 12, (not grafted). |
| C2 | As Example C1 |
| C3 | As Example C1 |
| C4 | As Example C1 |
| C5 | Blend of 23.5 wt.% P(VC/VA) copolymer (Kaiser KYHH) 0.15 wt.% MARK 4723 (Ba/Zn stabilizer mfg. by Witco div. of Argus Chem. Corp) 1.35 wt.% DRAPEX (epoxidized soy oil mfg. by Witco) 75.0 wt.% E/nBA/CO (63/27/10) MI = 100 5.0 wt.% E/nBA/GMA (66.8/28 /5.2) |
| C6 | As Example C5 except E/nBA/CO copol. is (60/30/10),MI =12 |
| C7 | As Example C5 |
| C8 | As Example C6 |
| C9 | As Example 1 |
| C10 | As Example 2 |
| IRGANOX 1035 is 2,6-di-tert-butyl-4-methyl phenol, manuf. by Ciba-Geigy Corp. | |
| nBA is n-butyl acrylate, E is Ethylene, CO is carbon monoxide, GMA is glycidyl methacrylate. P(VC/VA) is a poly(vinyl chloride/vinyl acetate) copolymer. | |
| MI is Melt Index | |
| wt. % is weight percent. | |

**TABLE II**

| SHEAR ADHESION FAILURE TEMPERATURE TESTS | | | |
|---|---|---|---|
| Example SAFT(deg.C.) | Substrate | Substrate Treatment | |
| 1 | MYLAR/Glass | 0.5% IRGASTAB T634 in Toluene | 140 (no failure) |
| 2 | " " | " " " | 140 (no faiure) |
| 3 | PVC(D)/Glass | None | 140 (substrate fail) |
| 4 | PVC(D)/Glass | None | 130 (substrate fail) |
| 5 | PVC(D)/Glass | None | 140 (substrate fail) |
| 6 | PVC(L)/Glass | None | 130 (substrate fail) |
| C1 | MYLAR/Glass | None | No Adhesion |
| C2 | " " | As Example 1 | 70 |
| C3 | PVC(D)/Glass | None | 80 |
| C4 | PVC(L)/Glass | None | 80 |
| C5 | PVC(D)/Glass | None | 80 |
| C6 | PVC(D)/Glass | None | 80 |
| C7 | PVC(L)/Glass | None | 80 |
| C8 | PVC(L)/Glass | None | 80 |
| C9 | MYLAR/Glass | None | 80 |
| C10 | MYLAR/Glass | None | 90 |
| MYLAR is grade 700D, a polyester film manufactured by E.I.duPont de Nemours and Company. | | | |
| Glass used was standard window glass. | | | |
| PVC(D) is DURACAP semi-rigid vinyl (PVC) sheet manufactured by B.F. Goodrich. | | | |
| PVC(L) is a different sample of the same grade of PVC sheet, but a sample with a slightly lighter color. The reason for the difference is unknown. | | | |
| IRGASTAB T634 is mixture of dibutyl tin dicarboxylate and dibutyl tin dimercaptide, manufactured by Ciba-Geigy. | | | |

## Claims

1. An adhesive composition, comprising:
(A) a graft copolymer which is the reaction product of
(a) a direct copolymer of (i) ethylene, (ii) 5-50 weight percent, based on the weight of the direct copolymer, of an alkyl acrylate, alkyl methacrylate or alkyl vinyl ether, the alkyl group having 1-8 carbon atoms, and (iii) 1-20 weight percent, based on the weight of the direct copolymer, of carbon monoxide, and
(b) 0.1-3.5 weight percent, based on the weight of the graft copolymer, of a vinyl alkoxysilane; and
(B) from 0-0.5 weight percent, based on the graft copolymer, of a silyl group condensation catalyst, provided that if no adherend to which the composition is to be applied contains a silyl group condensation catalyst, or if no such adherend has been surface treated to provide a coating of such a catalyst, the catalyst is present at a level of at least 0.1 weight percent.

2. The adhesive composition of claim 1 wherein the direct copolymer is an ethylene/n-butyl acrylate/carbon monoxide copolymer having from 10-40 weight percent n-butyl acrylate and 3-15 weight percent carbon monoxide.

3. The adhesive composition of claim 2 wherein the vinyl alkoxysilane is vinyl trimethoxysilane or vinyl triethyoxysilane, and is present in the graft copolymer at a level of from 0.3-1.0 weight percent.

4. A method of using the adhesive composition of claim 1 to achieve an adhesive bond which is maintained at elevated temperatures comprising:
(a) preparing a laminate wherein one adherend is glass, metal or wood, and the other adherend is a polymeric material, at least one of the adherends having been coated with a silyl group condensation catalyst and the adhesive composition of claim 1; and
(b) allowing the laminate to cure for at least 2 hours at ambient temperatures.

5. A method of using the adhesive composition of claim 1 to achieve an adhesive bond which is maintained at elevated temperatures, comprising:
(a) preparing a laminate wherein one adherend is glass, metal or wood, and the other adherend is PVC which contains a stabilizer which is capable of acting as a silyl group condensation catalyst;
(b) coating at least one adherend with the adhesive composition of claim 1; and
(c) allowing the laminate to cure for at least 2 hours at ambient temperatures.

## Patentansprüche

1. Klebstoffzusammensetzung umfassend:
(A) ein Pfropfcopolymeres, welches das Reaktionsprodukt ist von
(a) einem direkten Copolymeren von (i) Ethylen, (ii) 5-50 Gew.-%, bezogen auf das Gewicht des direkten Copolymeren, eines Alkylacrylats, Alkylmethacrylats oder Alkylvinylethers, deren Alkylgruppe 1-8 Kohlenstoffatome aufweist, und (iii) 1-20 Gew.-%, bezogen auf das Gewicht des direkten Copolymeren, Kohlenmonoxid, und
(b) 0,1-3,5 Gew.-%, bezogen auf das Gewicht des Pfropfcopolymeren, eines Vinylalkoxysilans; und
(B) 0-0,5 Gew.-%, bezogen auf das Pfropfcopolymere, eines Silylgruppenkondensationskatalysators mit der Maßgabe, daß der Katalysator in einer Menge von wenigstens 0,1 Gew.-% vorhanden ist, sofern kein zu verklebendes Teil, auf welches die Zusammensetzung aufgetragen werden soll, einen Silylgruppenkondensationskatalysator enthält, oder sofern kein zu verklebendes Teil oberflächenbehandelt worden ist, um einen Überzug aus einem solchen Katalysator zu ergeben.

2. Klebstoffzusammensetzung nach Anspruch 1, in welcher das direkte Copolymere ein Ethylen/n-Butylacrylat/Kohlenmonoxid-Copolymeres ist, welches 10-40 Gew.-% n-Butylacrylat und 3-15 Gew.-% Kohlenmonoxid enthält.

3. Klebstoffzusammensetzung nach Anspruch 2, in welcher das Vinylalkoxysilan Vinyltrimethoxysilan oder Vinyltriethoxysilan ist und in dem Pfropfcopolymeren in einer Menge von 0,3-1,0 Gew.-% vorliegt.

4. Verfahren zur Verwendung der Klebstoffzusammensetzung von Anspruch 1 zur Herstellung einer Klebstoffbindung, die bei erhöhten Temperaturen aufrechterhalten bleibt, umfassend:
(a) Herstellung eines Laminats, bei welchem ein zu verklebendes Teil aus Glas, Metall oder Holz besteht, und das andere zu verklebende Teil aus einem polymeren Material besteht, wobei wenigstens eines der zu verklebenden Teile mit einem Silylgruppenkondensationskatalysator und der Klebstoffzusammensetzung von Anspruch 1 beschichtet worden ist, und
(b) Aushärtenlassen des Laminats während wenigstens 2 Stunden bei Umgebungstemperaturen.

5. Verfahren zur Verwendung der Klebstoffzusammensetzung nach Anspruch 1 zur Herstellung einer Klebstoffbindung, die bei erhöhten Temperaturen aufrechterhalten bleibt, umfassend:
(a) Herstellen eines Laminats, bei welchem ein zu verklebender Teil aus Glas, Metall oder Holz besteht, und der andere zu verklebende Teil aus PVC besteht, welcher einen Stabilisator enthält, der als Silylgruppenkondensationskatalysator wirken kann,
(b) Beschichten wenigstens eines der zu verklebenden Teile mit der Klebstoffzusammensetzung von Anspruch 1, und
(c) Aushärtenlassen des Laminats während wenigstens zwei Stunden bei Umgebungstemperaturen.

## Revendications

1. Composition adhésive, comprenant :
(A) un copolymère greffé qui est le produit de la réaction de
(a) un copolymère direct de (i) éthylène, (ii) 5-50% en poids, par rapport au poids du copolymère direct, d'un acrylate d'alcoyle, d'un méthacrylate d'alcoyle, ou d'un vinyléther d'alcoyle, ayant un radical alcoyle avec 1-8 atomes de carbone, et (iii) 1-20% en poids, par rapport au poids du copolymère direct, de monoxyde de carbone, et
(b) 0,1-3,5% en poids, par rapport au poids du copolymère greffé, d'un vinylalcoxysilane, et
(B) de 0-0,5% en poids, par rapport au copolymère greffé, d'un catalyseur de condensation de radical silyle, à condition que si aucun adhérent auquel la composition doit être appliquée ne contient un catalyseur de condensation de radical silyle, ou si aucun adhérent n'a été traité en surface pour fournir un revêtement d'un tel catalyseur, le catalyseur est présent au moins à un taux de 0,01% en poids.

2. Composition adhésive suivant la revendication 1, dans laquelle le copolymère direct est un copolymère d'éthylène/acrylate de n-butyle/monoxyde de carbone ayant 10-40% en poids d'acrylate de n-butyle et 3-15% en poids de monoxyde de carbone.

3. Composition adhésive suivant la revendication 2, dans laquelle le vinylalcoxysilane est du vinyltriméthoxysilane ou du vinyltriéthoxysilane et est présent dans le copolymère greffé à un taux de 0,3-1,0% en poids.

4. Procédé d'utilisation de la composition adhésive de la revendication 1, pour obtenir une liaison adhésive qui est conservée à des températures élevées, qui consiste à :
(a) préparer un stratifié dans lequel un adhérent est du verre, du métal ou du bois, et l'autre adhérent est une substance polymère, au moins un des adhérents ayant été enduit avec un catalyseur de condensation de radical silyle et la composition adhésive de la revendication 1; et
(b) laisser le stratifié durcir pendant au moins 2 heures à température ambiante.

5. Procédé d'utilisation de la composition adhésive de la revendication 1, pour obtenir une liaison adhésive qui est conservée à des températures élevées, qui consiste à :
(a) préparer un stratifié dans lequel un adhérent est du verre, du métal ou du bois, et l'autre adhérent est du PVC qui contient un stabilisant qui est capable d'agir comme un catalyseur de condensation de radical silyle;
(b) enduire au moins un adhérent avec la composition adhésive de la revendication 1; et
(c) laisser le stratifié durcir au moins 2 heures à température ambiante.
